# EUROPEAN PATENT SPECIFICATION

(11) **EP 4 011 688 B1**
(45) Date of publication and mention of the grant of the patent: **18.02.2026**
(21) Application number: 20859321.0
(22) Date of filing: 07.08.2020
(51) Int. Cl.: B60L 58/13, B60L 58/25, H01M 10/42, H01M 10/44, B60L 58/27, B60L 50/60, B60L 50/15

(54) **CHARGING AND DISCHARGING CONTROL METHOD FOR HIGH-VOLTAGE BATTERY, AND DEVICE FOR SAME**
VERFAHREN ZUR STEUERUNG DES LADENS UND ENTLADENS EINER HOCHSPANNUNGSBATTERIE UND VORRICHTUNG DAFÜR
PROCÉDÉ DE COMMANDE DE CHARGE ET DE DÉCHARGE POUR BATTERIE À HAUTE TENSION, ET DISPOSITIF ASSOCIÉ

(30) Priority: 27.08.2019 CN 201910796910
(43) Date of publication of application: 15.06.2022
(73) Proprietor: Great Wall Motor Company Limited, Baoding, Hebei 071000 (CN)
(72) Inventor: QIAN, Chao, Baoding, Hebei 071000 (CN); ZHANG, Nan, Baoding, Hebei 071000 (CN); LI, Lei, Baoding, Hebei 071000 (CN); LIU, Bao, Baoding, Hebei 071000 (CN); SONG, Dandan, Baoding, Hebei 071000 (CN); SUN, Zhaolue, Baoding, Hebei 071000 (CN); SONG, Haijun, Baoding, Hebei 071000 (CN)
(74) Representative: dompatent
(86) International application number: PCT/CN2020/107838
(87) International publication number: WO 2021/036750

(56) References cited:
- CN-A- 103 419 614
- CN-A- 105 517 868
- CN-A- 106 143 467
- CN-A- 106 143 482
- CN-A- 106 143 482
- CN-A- 107 342 619
- JP-A- 2007 269 207
- US-A1- 2012 261 397
- US-A1- 2019 001 805

## Description

The present application claims priority from Chinese patent application No. 201910796910.8, submitted to China National Intellectual Property Administration, filed on August 27, 2019 and entitled by "Charging and Discharging Control Method for High-voltage Battery, and Device for Same".

### Technical Field

The present disclosure relates to the technical field of hybrid vehicles, in particular to a charging and discharging control method, device and apparatus for a high-voltage battery and a medium.

### Background Art

With the increasing deterioration of the global environment, all countries have higher and higher requirements for energy consumption and emissions of vehicles, and thus new energy vehicles have become the main direction of development of all countries. The hybrid vehicles not only can achieve energy conservation and emission reduction, but also can meet the requirements of driving ranges of consumers and thus have become a more suitable solution for development of the new energy vehicles currently. As a core technology of the hybrid vehicles, a control policy has been a key area of research and development design. Energy management serves as a core part of policy development of the hybrid vehicles, and charging and discharging control of overall vehicles is the most important thing of energy management. Therefore, reasonable charging and discharging opportunities appear to be particularly important.

Control of the existing hybrid vehicles on the charging and discharging opportunities is mostly achieved on the basis of a simple logic threshold policy. Under the condition that a battery state, an engine state and a motor state are all normal, if a state-of-charge (SOC) of a high-voltage battery is lower than a certain threshold, a vehicle speed is higher than a certain threshold, a rotating speed of an engine is higher than a certain threshold, a torque request of the overall vehicle is lower than a certain threshold, or an opening degree of an accelerator pedal is lower than a certain threshold, the engine conducts motor driving or assistance under bad working conditions by driving a motor to charge the high-voltage battery.

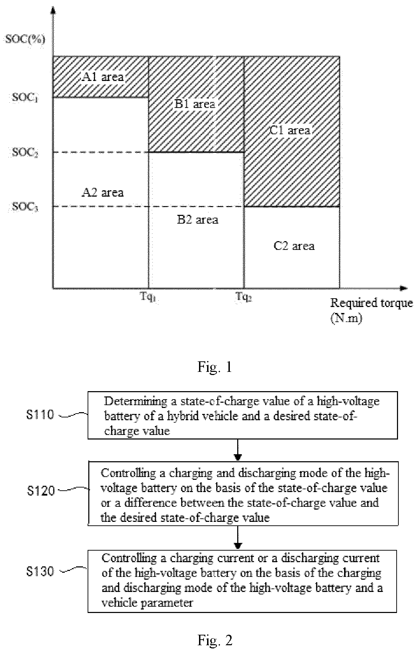

Fig. 1 shows a schematic diagram of a charging and discharging control method for a high-voltage battery of a hybrid vehicle according to an embodiment in prior art. As shown in Fig. 1, according to a required torque threshold value at the current rotating speed of the engine and a battery state-of-charge threshold value at the current rotating speed, a partitioning diagram of a charging and discharging control policy in the current state is established to comprehensively control the charging and discharging opportunities and the charging and discharging power.

The inventor discovers that the control policy on the basis of the logical threshold is relatively simple in control, but is not elaborate enough and cannot achieve staged control according to parameter thresholds and then cannot achieve more full utilization of electric quantity of the high-voltage battery according to different working conditions in various stages.

For this purpose, in this field, there is an urgent need for a charging and discharging control solution for the high-voltage battery, which can achieve staged precision control and, better improve the economy and is wide in application range and applicable to the hybrid vehicles of various architectures.

The content in the background art is merely the technology known to the inventor and may not necessarily represent the prior art in this field.

US 2012/261397 A1, CN 106 143 482 A and US 2019/001805 A1 show background art for the present invention.

### Summary of the Invention

The present invention is defined in claims 1, 3, 5 and 6.

In view of at least one of the defects in the prior art, the embodiments of the present disclosure provide a charging and discharging control method for a high-voltage battery of a hybrid vehicle, comprising: determining a state-of-charge value of the high-voltage battery of the hybrid vehicle and a desired state-of-charge value; controlling a charging and discharging mode of the high-voltage battery on the basis of the state-of-charge value of the high-voltage battery or a difference between the state-of-charge value of the high-voltage battery and the desired state-of-charge value; and controlling a charging current or a discharging current of the high-voltage battery on the basis of the charging and discharging mode of the high-voltage battery and a vehicle parameter.

According to one aspect of the present disclosure, the method further comprises: controlling the high-voltage battery to enter a heating mode in response to that a temperature of the high-voltage battery is lower than a preset threshold.

According to the present disclosure, the charging and discharging mode comprises: a discharging mode, an electric quantity holding mode, an efficiency charging mode and a forced charging mode.

According to the present disclosure, the discharging mode comprises: an active discharging mode and a passive discharging mode; and the efficiency charging mode comprises: a general efficiency charging mode and a high efficiency charging mode.

According to the present disclosure, the controlling the charging and discharging mode of the high-voltage battery on the basis of the state-of-charge value of the high-voltage battery or the difference between the state-of-charge value of the high-voltage battery and the desired state-of-charge value comprises: controlling the high-voltage battery to enter the active discharging mode in response to that the state-of-charge value of the high-voltage battery is larger than an active discharging threshold, or the difference between the state-of-charge value of the high-voltage battery and the desired state-of-charge value is larger than an active discharging difference threshold; controlling the high-voltage battery to enter the passive discharging mode in response to that the state-of-charge value of the high-voltage battery is smaller than the active discharging threshold and larger than a passive discharging threshold, or the difference between the state-of-charge value of the high-voltage battery and the desired state-of-charge value is smaller than the active discharging difference threshold and larger than a passive discharging difference threshold; controlling the high-voltage battery to enter the electric quantity holding mode in response to that the state-of-charge value of the high-voltage battery is smaller than the passive discharging threshold and larger than the electric quantity holding threshold, or the difference between the state-of-charge value of the high-voltage battery and the desired state-of-charge value is smaller than the passive discharging difference threshold and larger than the electric quantity holding difference threshold; controlling the high-voltage battery to enter the general efficiency charging mode in response to that the state-of-charge value of the high-voltage battery is smaller than the electric quantity holding threshold and larger than an efficiency charging threshold, or the difference between the state-of-charge value of the high-voltage battery and the desired state-of-charge value is smaller than the electric quantity holding difference threshold and larger than an efficiency charging difference threshold; controlling the high-voltage battery to enter the high efficiency charging mode in response to that the state-of-charge value of the high-voltage battery is smaller than the efficiency charging threshold and larger than the forced charging threshold, or the difference between the state-of-charge value of the high-voltage battery and the desired state-of-charge value is smaller than the efficiency charging difference threshold and larger than the forced charging difference threshold; and controlling the high-voltage battery to enter the forced charging mode in response to that the state-of-charge value of the high-voltage battery is smaller than the forced charging threshold, or the difference between the state-of-charge value of the high-voltage battery and the desired state-of-charge value is smaller than the forced charging difference threshold.

According to the present disclosure, determining the charging current or the discharging current of the high-voltage battery on the basis of the charging and discharging mode of the high-voltage battery and the vehicle parameter after controlling the high-voltage battery to enter the active discharging mode comprises: determining the discharging current of the high-voltage battery on the basis that the torque of the motor is equal to the required torque of the overall vehicle in response to that the required torque of the overall vehicle is smaller than a maximal torque of the motor, the opening degree of the accelerator pedal is smaller than the engine startup pedal opening degree threshold , and the vehicle speed is smaller than a engine startup vehicle speed threshold ; and determining the discharging current of the high-voltage battery on the basis that the torque of the motor is equal to the maximal torque of the motor in response to that the required torque of the overall vehicle is larger than the maximal torque of the motor, or the opening degree of the accelerator pedal is larger than the engine startup pedal opening degree threshold , or the vehicle speed is larger than the engine startup vehicle speed threshold . Determining the charging current or the discharging current of the high-voltage battery on the basis of the charging and discharging mode of the high-voltage battery and the vehicle parameter after controlling the high-voltage battery to enter the passive discharging mode comprises: determining the discharging current of the high-voltage battery on the basis that the torque of the motor is equal to the required torque of the overall vehicle in response to that the required torque of the overall vehicle is smaller than the engine startup torque threshold , and the opening degree of the accelerator pedal is smaller than the engine startup pedal opening degree threshold ; and determining the discharging current of the high-voltage battery on the basis that the torque of the motor is equal to the difference obtained by subtracting the request torque of the engine from the required torque of the overall vehicle in response to that the required torque of the overall vehicle is larger than the engine startup torque threshold , and the opening degree of the accelerator pedal is larger than the engine startup pedal opening degree threshold . Determining the charging current or the discharging current of the high-voltage battery on the basis of the charging and discharging mode of the high-voltage battery and the vehicle parameter after controlling the high-voltage battery to enter the electric quantity holding mode comprises: determining the charging current of the high-voltage battery on the basis that the torque of the motor is equal to the required torque of the consumed power of the high-voltage accessories. Determining the charging current or the discharging current of the high-voltage battery on the basis of the charging and discharging mode of the high-voltage battery and the vehicle parameter after controlling the high-voltage battery to enter the general efficiency charging mode comprises: determining the charging current of the high-voltage battery on the basis that the torque of the motor is equal to the difference obtained by subtracting the optimal torque of the current rotating speed of the engine from the required torque of the engine. Determining the charging current or the discharging current of the high-voltage battery on the basis of the charging and discharging mode of the high-voltage battery and the vehicle parameter after controlling the high-voltage battery to enter the high efficiency charging mode comprises: determining the charging current of the high-voltage battery on the basis that the torque of the motor is equal to a difference obtained by subtracting the optimal torque of the current rotating speed of the engine and a high efficiency charging compensation torque from the required torque of the engine. Determining the charging current or the discharging current of the high-voltage battery on the basis of the charging and discharging mode of the high-voltage battery and the vehicle parameter after controlling the high-voltage battery to enter the forced charging mode comprises: determining the charging current of the high-voltage battery on the basis that the torque of the motor is equal to the required torque of the forced charging power at the current rotating speed.

The embodiments of the present disclosure further provide a charging and discharging control device for the high-voltage battery of the hybrid vehicle, characterized by comprising: a state-of-charge value determining module, a charging and discharging mode control module and a charging and discharging current control module. The state-of-charge value determining module is used for determining the state-of-charge value of the high-voltage battery of the hybrid vehicle and the desired state-of-charge value; the charging and discharging mode control module is used for controlling the charging and discharging mode of the high-voltage battery on the basis of the state-of-charge value of the high-voltage battery or a difference between the state-of-charge value of the high-voltage battery and the desired state-of-charge value; and the charging and discharging current control module is used for controlling the charging current or the discharging current of the high-voltage battery on the basis of the charging and discharging mode of the high-voltage battery and the vehicle parameter.

According to one aspect of the present disclosure, the device further comprises: a temperature control module. The temperature control module is used for controlling the high-voltage battery to enter the heating mode in response to that the temperature of the high-voltage battery is lower than the preset threshold.

By employing the technical solution provided by the embodiments of the present disclosure, the problem that a control policy on the basis of a logical threshold is relatively simple in control and is not elaborate enough is solved, the charging and discharging mode of the high-voltage battery is controlled on the basis of staged precision control on single parameter of the state-of-charge value of the high-voltage battery of the hybrid vehicle or the different between the state-of-charge value of the high-voltage battery and the desired state-of-charge value, and different charging and discharging modes employ different charging and discharging policies, so that more full utilization of electric quantity of the high-voltage battery on the basis of different working conditions in various stages is achieved, the economy is better improved, and the device is wide in application range and may be applied to the hybrid vehicles of various architectures.

The above description is only an overview of the technical solution of the present application. In order to more clearly know the technical means of the present application, implementation can be made according to the content of the specification. To make the above and other objectives, features and advantages of the present application more comprehensible, the specific implementations of the present application are listed below.

### Brief Description of the Drawings

In order to more clearly describe the technical solutions of the embodiments of the present application or in the prior art, the accompanying drawings required to describe the embodiments or the prior art are briefly described below. Apparently, the accompanying drawings described below are some embodiments of the present application. Those ordinary skilled in the art may further obtain other accompanying drawings based on these accompanying drawings without inventive effort.

Accompanying drawings, constituting part of the present disclosure, are used for providing further understanding of the present disclosure, and the illustrative embodiments of the present disclosure and descriptions thereof are used to illustrate the present disclosure, and not intended to improperly limit the present disclosure. In the drawings:
Fig. 1 shows a schematic diagram of a charging and discharging control method for a high-voltage battery of a hybrid vehicle according to one embodiment in the prior art;
Fig. 2 shows a flow chart of a charging and discharging control method for a high-voltage battery of a hybrid vehicle according to one embodiment of the present disclosure;
Fig. 3 shows a schematic diagram of division of a charging and discharging control mode according to one embodiment of the present disclosure;
Fig. 4 shows a flow chart of a charging and discharging control method for a high-voltage battery of a hybrid vehicle according to another embodiment of the present disclosure;
Fig. 5 shows a schematic diagram of division of a charging and discharging control mode according to another embodiment of the present disclosure;
Fig. 6 shows a flow chart of a charging and discharging control method for a high-voltage battery of a hybrid vehicle according to another embodiment of the present disclosure;
Fig. 7 shows a schematic diagram of a temperature curve for a high-voltage battery according to one embodiment of the present disclosure;
Fig. 8 shows a schematic diagram of a charging and discharging control device for a high-voltage battery of a hybrid vehicle according to one embodiment of the present disclosure;
Fig. 9 shows a schematic diagram of a charging and discharging control device for a high-voltage battery of a hybrid vehicle according to another embodiment of the present disclosure;
Fig. 10 shows a schematic diagram of a charging and discharging control device for a high-voltage battery of a hybrid vehicle according to yet another embodiment of the present disclosure;
Fig. 11 schematically shows a block diagram of a charging and discharging control apparatus for a high-voltage battery for executing the method according to the present application;
Fig. 12 schematically shows a storage unit for saving or carrying a program code implementing the method according to the present application.

List of reference numerals:
100 state-of-charge value determining module; 200 charging and discharging mode control module; 210 active discharging mode control module; 220 passive discharging mode control module; 230 electric quantity holding mode control module; 240 general efficiency charging mode control module; 250 high efficiency charging mode control module; 260 forced charging mode control module; 300 charging and discharging current control module; 310 active discharging module; 320 passive discharging module; 330 electric quantity holding module; 340 general efficiency charging module; 350 high efficiency charging module; 360 forced charging module; 400 temperature control module.

### Detailed Description of the Invention

Certain exemplary embodiments are only simply described hereinafter. As those skilled in the art appreciate, the described embodiments may be modified in various different ways, without departing from the scope of the present disclosure. Therefore, the drawings and description are regarded as illustrative in nature and not restrictive.

In the description of the present disclosure, it should be understood that the terms "first" and "second" are used only for description and shall not be interpreted as an indication or implication of relative importance or an implicit indication of the number of technical features. Thus, features defined with "first", "second" may include at least one or more such features, either explicitly or implicitly. In the description of the present disclosure, "a plurality of' means two or more, unless otherwise specifically defined.

The following disclosure provides many different implementations or examples to implement different structures of the present disclosure. To simplify the disclosure of the present disclosure, the components and settings of specific examples are described below. These are, of course, merely examples and are not intended to be limiting of the present disclosure. In addition, the present disclosure may repeat reference numerals and/or reference letters in various examples. Such repetition is for the purpose of simplification and clarity, without indicating the relationships between various implementations and/or settings in discuss.

The preferred embodiments of the present disclosure are described in combination with the drawings below. It should be understood that the preferred embodiments described here are used for illustrating and explaining the present disclosure merely, but not used for limiting the present disclosure.

A hybrid vehicle refers to a vehicle of which a driving system is composed of two or more single driving systems that can operate at the same time, and driving power of the vehicle is provided by the single driving system alone or jointly according to an actual driving state of the vehicle. That is, traditional engines (diesel engines or gasoline engines) and electric motors are used as power sources, and some engines are modified to use other alternative fuels, such as compressed natural gas, propane and ethanol fuels.

### Embodiment 1

Fig. 2 shows a flow chart of a charging and discharging control method for a high-voltage battery of a hybrid vehicle according to one embodiment of the present disclosure. The charging and discharging control method comprises the following steps:
In step S110, determining a state-of-charge value of the high-voltage battery of the hybrid vehicle and a desired state-of-charge value.

The state-of-charge value (SOC) is a ratio of a surplus capacity of a storage battery after being used for a period time or laying up for a long time to a capacity of the storage battery in a fully charged state, usually represented by percentage. A value range of the state-of-charge value is 0-1; when SOC=0, it represents that the battery is fully discharged; and when SOC=1, it represents that the battery is fully charged.

The desired state-of-charge value, also called desired SOC, is a desired state-of-charge value of an overall vehicle. In the normal running process of the overall vehicle, the SOC of the high-voltage battery may be maintained at the desired SOC. The desired SOC is related to a driving mode and a vehicle speed, and a temperature of the high-voltage battery, an environment temperature and powers of high-voltage accessories may also affect the desired SOC.

In the same driving mode, if the vehicle speed is higher, the desired SOC should be properly increased; and the higher the vehicle speed is, the larger the consumed electric quantity is, so that the charging should be correspondingly improved.

At the same vehicle speed, there should be different desired SOCs according to different driveability requirements in different driving modes. For example, an EV mode is a pure electric running mode, the engine is not started, and the desired SOC is meaningless. The desired SOC of an AWD mode (all-terrain driving mode)> the desired SOC of a Sport mode (power mode)> the desired SOC of an Auto mode (automatic driving mode), and the desired SOC of a Save mode (power save mode) is set according to the user requirement and is 50% to the minimum.

In the Auto mode, for the setting of the desired SOC, in the premise of ensuring the power consumption of the overall vehicle, the electric quantity of the high-voltage battery is used as much as possible so as to achieve better economy.

In the Sport mode, the engine runs always to mainly provide power output, and electric power is used for power compensation only. So, the Sport mode has relatively high requirement for driveability, and the desired SOC should rise by 10-20% compared with the AUTO mode in order to ensure enough power.

In the Save mode, it is substantially consistent to the AUTO mode, a part of the electric quantity requires to be held for pure electric running under the urban working condition. In the Save mode, the desired SOC is set in such a way that under the non-gun-plug-in charging condition, for the desired electric quantity which can be charged for a user, the desired SOC is theoretically larger than 50%.

In the AWD mode, there is a rear axle motor in a four-wheel driven mode. In order to deal with a bad road and ensure better passing ability, more electric quantity requires to use the rear axle motor, so that the consumption is increased correspondingly; and under the condition of ensuring the drive ability and the passing ability, in order to deal with a relatively poor limiting condition, the desired SOC should rise by 20-30% compared with the SPORT mode.

When the temperature of the high-voltage battery is low, an available power of the battery and the efficiency are low, and the desired SOC should be properly increased. When the environment temperature is relatively low or high, by considering reduction in available power of the battery and increase in potential electricity load, the desired SOC should be properly increased.

When the consumed power of the high-voltage accessories is relatively high, the desired SOC should be properly increased so as to ensure sufficient electric quantity for consumptions of the high-voltage accessories. That is, when the power of the high-voltage accessories, such as a direct current converter (DCDC), a thermistor heater (power temperature, PTC) and a compressor (CMP), is larger than a power threshold, and the temperature of the high-voltage battery is lower than a certain value, the desired SOC should be properly increased.

In step 210, controlling a charging and discharging mode of the high-voltage battery on the basis of the state-of-charge value of the high-voltage battery or a difference between the state-of-charge value of the high-voltage battery and the desired state-of-charge value.

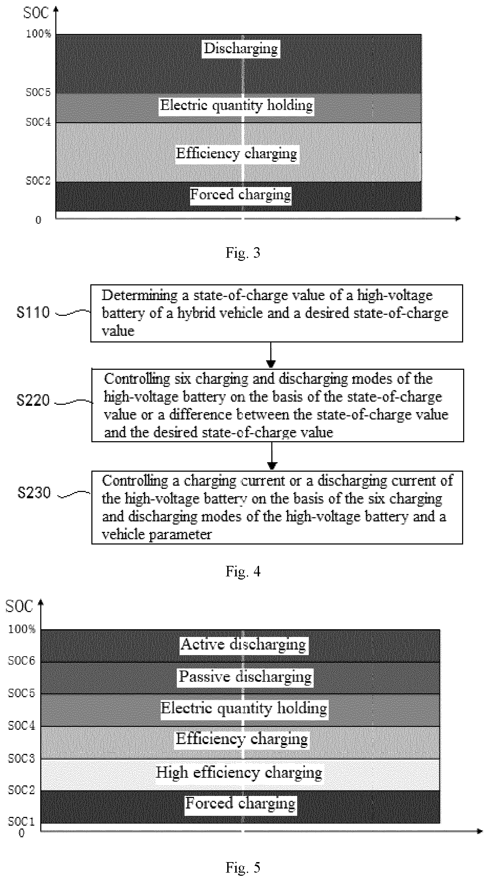

On the basis of the state-of-charge value of the high-voltage battery or the difference between the state-of-charge value of the high-voltage battery and the desired state-of-charge value, the charging and discharging mode of the high-voltage battery is divided into four types: a discharging mode, an electric quantity holding mode, a charging mode and a forced charging mode. As shown in Fig. 3, it shows a schematic diagram of division of a charging and discharging control mode according to one embodiment of the present disclosure.

Referring to Fig. 3, settings of various thresholds are determined according to the desired SOC and a lowest available SOC and a highest available SOC defined by the high-voltage battery.

A forced charging threshold SOC2 is set as a sum of the lowest available SOC1 and a first compensation value. An interval between the forced charging threshold SOC2 and an electric quantity holding threshold SOC4 is an efficiency charging interval. The electric quantity holding threshold SOC4 is generally set as the desired SOC. A discharging threshold SOC5 is set as a sum of the electric quantity holding threshold SOC4 and a second compensation value or a difference between the highest available SOC and a third compensation value. Each compensation value is set on experience.

Various difference thresholds are set as a difference between various thresholds and the desired SOC. In different driving modes, there may be different desired SOCs, so that with the difference judgment condition, it may be ensured that there may be different entry conditions for different driving modes, and the state-of-charge values which may be held are further different.

Specifically, the high-voltage battery is controlled to enter the discharging mode in response to that the state-of-charge value of the high-voltage battery is larger than a discharging threshold, or the difference between the state-of-charge value of the high-voltage battery and the desired state-of-charge value is larger than a discharging difference threshold.

The high-voltage battery is controlled to enter the electric quantity holding mode in response to that the state-of-charge value of the high-voltage battery is smaller than a discharging threshold and larger than an electric quantity holding threshold, or the difference between the state-of-charge value of the high-voltage battery and the desired state-of-charge value is smaller than a discharging difference threshold and larger than the electric quantity holding difference threshold.

The high-voltage battery is controlled to enter the efficiency charging mode in response to that the state-of-charge value of the high-voltage battery is smaller than the electric quantity holding threshold and larger than a forced charging threshold, or the difference between the state-of-charge value of the high-voltage battery and the desired state-of-charge value is smaller than the electric quantity holding difference threshold and larger than a forced charging difference threshold.

The high-voltage battery is controlled to enter the forced charging mode in response to that the state-of-charge value of the high-voltage battery is smaller than the forced charging threshold, or the difference between the state-of-charge value of the high-voltage battery and the desired state-of-charge value is smaller than the forced charging difference threshold.

In step S130, controlling a charging current or a discharging current of the high-voltage battery on the basis of the charging and discharging mode of the high-voltage battery and a vehicle parameter.

In different charging and discharging modes, the high-voltage battery is charged by the motor, and staged precision control may be achieved by different charging and discharging policies.

In the discharging mode, the electric quantity is used according to the policy condition. The required torque of the overall vehicle is satisfied with the engine as much as possible.

In the electric quantity holding mode, a torque of the motor is equal to a required torque of a consumed power of high-voltage accessories, and the generated energy of the motor may maintain the SOC value of the high-voltage battery.

In the efficiency charging mode, according to an optimal working interval of the engine, a charging torque of the motor is determined to enable the engine to be in a high efficiency working region.

In the forced charging mode, the SOC of the high-voltage battery is very low, and the torque of the motor is employed as large as possible to charge the high-voltage battery without considering the working interval of the engine.

A specific vehicle parameter is further considered for a specific charging and discharging policy, and the specific policy is as follows.

Specifically, after the high-voltage battery is controlled to enter the discharging mode, in response to that the required torque of the overall vehicle is smaller than a engine startup torque threshold , and an opening degree of an accelerator pedal is smaller than an engine startup pedal opening degree threshold, at this time, the vehicle is in the pure electric driven mode, and the discharging current of the high-voltage battery is determined on the basis that the torque of the motor is equal to the required torque of the overall vehicle; and in response to that the required torque of the overall vehicle is larger than the engine startup torque threshold , or the opening degree of the accelerator pedal is larger than the engine startup pedal opening degree threshold , at this time, the vehicle is in a hybrid driven mode, the motor distributes the torque in priority, the high-voltage battery is discharged, and the discharging current of the high-voltage battery is determined on the basis that the torque of the motor is equal to a difference obtained by subtracting a request torque of the engine from the required torque of the overall vehicle.

After the high-voltage battery is controlled to enter the electric quantity holding mode, a charging power satisfies a consumed power of high-voltage accessories such as DCDC, PTC and CMP, and the charging current of the high-voltage battery is determined on the basis that the torque of the motor is equal to a required torque of the consumed power of the high-voltage accessories.

After the high-voltage battery is controlled to enter the efficiency charging mode, except satisfying the consumed power of the high-voltage accessories such as DCDC, PTC and CMP, the charging power further requires to determine a charging and assistance state of the motor according to the high efficiency working interval of the engine; the charging current of the high-voltage battery is determined on the basis that the torque of the motor is equal to a difference obtained by subtracting an optimal torque of a current rotating speed of the engine from the required torque of the engine; and if the torque of the motor is positive, the motor is in the assistance state, and if the torque of the motor is negative, the motor is in a power generation state. After the high-voltage battery is controlled to enter the forced charging mode, at this time, the SOC has already approached an SOC lower threshold of the high-voltage battery, so that without considering the high efficiency working interval of the engine, the charging power of the motor is increased as much as possible, and high-voltage battery is rapidly charged; and the charging current of the high-voltage battery is determined on the basis that the torque of the motor is equal to a required torque of a forced charging power at the current rotating speed.

By employing the technical solution provided by this embodiment, the problem that a control policy on the basis of a logical threshold is relatively simple in control and is not elaborate enough is solved, the charging and discharging mode of the high-voltage battery is controlled on the basis of staged precision control on single parameter of the state-of-charge value of the high-voltage battery of the hybrid vehicle or the different between the state-of-charge value of the high-voltage battery and the desired state-of-charge value, and different charging and discharging modes employ different charging and discharging policies, so that more full utilization of electric quantity of the high-voltage battery on the basis of different working conditions in various stages is achieved, the economy is better improved, and the method is wide in application range and may be applied to the hybrid vehicles of various architectures.

Fig. 4 shows a flow chart of a charging and discharging control method for a high-voltage battery of a hybrid vehicle according to one embodiment of the present disclosure. The charging and discharging control method comprises the following steps.

In step S110, determining a state-of-charge value of the high-voltage battery of the hybrid vehicle and a desired state-of-charge value.

Step S110 is the same as S110 of the above embodiment in Fig. 2 and is not described further.

In step 220, controlling a charging and discharging mode of the high-voltage battery on the basis of the state-of-charge value of the high-voltage battery or a difference between the state-of-charge value of the high-voltage battery and the desired state-of-charge value.

For a vehicle of a four-wheel driven architecture, a front axle motor and the rear axle motor are equipped at the same time, and on the basis of the state-of-charge value of the high-voltage battery, or a difference between the state-of-charge value of the high-voltage battery and the desired state-of-charge value, the charging and discharging mode is divided into six types: an active discharging mode, a passive discharging mode, an electric quantity holding mode, a general efficiency charging mode, a high efficiency charging mode and a forced charging mode. In the high efficiency mode, the charging torque of the motor is larger, and alternatively, the general efficiency charging mode and the high efficiency charging mode may further be combined. As shown in Fig. 5, it shows a schematic diagram of division of a charging and discharging control mode according to one embodiment of the present disclosure.

Referring to Fig. 5, settings of various thresholds are determined according to the desired SOC and a lowest available SOC and a highest available SOC defined by the high-voltage battery.

A forced charging threshold SOC2 is set as a sum of the lowest available SOC1 and a first compensation value. An interval between the forced charging threshold SOC2 and an electric quantity holding threshold SOC4 is an interval of general efficiency charging and high efficiency charging. An efficiency charging threshold SOC3 is set on experience. A passive discharging threshold SOC5 is set as a sum of the electric quantity holding threshold SOC4 and the second compensation value. An active discharging threshold SOC6 is set as a difference obtained by subtracting the third compensation value from the highest available SOC of the high-voltage battery. Each compensation value is set on experience, wherein the electric quantity holding threshold SOC4 is generally set as the desired SOC.

Specifically, the high-voltage battery is controlled to enter the active discharging mode in response to that the state-of-charge value of the high-voltage battery is larger than an active discharging threshold, or the difference between the state-of-charge value of the high-voltage battery and the desired state-of-charge value is larger than an active discharging difference threshold.

The high-voltage battery is controlled to enter the passive discharging mode in response to that the state-of-charge value of the high-voltage battery is smaller than the active discharging threshold and larger than the passive discharging threshold, or the difference between the state-of-charge value of the high-voltage battery and the desired state-of-charge value is smaller than the active discharging difference threshold and larger than the passive discharging difference threshold.

The high-voltage battery is controlled to enter the electric quantity holding mode in response to that the state-of-charge value of the high-voltage battery is smaller than the passive discharging threshold and larger than the electric quantity holding threshold, or the difference between the state-of-charge value of the high-voltage battery and the desired state-of-charge value is smaller than the passive discharging difference threshold and larger than the electric quantity holding difference threshold.

The high-voltage battery is controlled to enter the general efficiency charging mode in response to that the state-of-charge value of the high-voltage battery is smaller than the electric quantity holding threshold and larger than an efficiency charging threshold, or the difference between the state-of-charge value of the high-voltage battery and the desired state-of-charge value is smaller than the electric quantity holding difference threshold and larger than an efficiency charging difference threshold.

The high-voltage battery is controlled to enter the high efficiency charging mode in response to that the state-of-charge value of the high-voltage battery is smaller than the efficiency charging threshold and larger than a forced charging threshold, or the difference between the state-of-charge value of the high-voltage battery and the desired state-of-charge value is smaller than the efficiency charging difference threshold and larger than a forced charging difference threshold.

The high-voltage battery is controlled to enter the forced charging mode in response to that the state-of-charge value of the high-voltage battery is smaller than the forced charging threshold, or the difference between the state-of-charge value of the high-voltage battery and the desired state-of-charge value is smaller than the forced charging difference threshold.

In step S230, controlling a charging current or a discharging current of the high-voltage battery on the basis of the charging and discharging mode of the high-voltage battery and a vehicle parameter.

In different charging and discharging modes, the high-voltage battery is charged by the motor, and staged precision control may be achieved by different charging and discharging policies.

In the active discharging mode, the positive torque of the motor is actively requested, and the required torque of the overall vehicle is satisfied by the motor as much as possible.

In the passive discharging mode, the electric quantity is used according to the policy condition. The required torque of the overall vehicle is satisfied with the motor as much as possible.

In the electric quantity holding mode, the torque of the motor is equal to the required torque of the consumed power of the high-voltage accessories, and the generated energy of the motor may maintain the SOC value of the high-voltage battery.

In the general efficiency charging mode, according to the optimal working interval of the engine, the charging torque of the motor is determined to enable the engine to be in the high efficiency working region.

In the high efficiency charging mode, compared with the general efficiency charging mode, the charging torque of the motor is larger.

In the forced charging mode, the SOC of the high-voltage battery is very low, and the large torque of the motor is employed to charge the high-voltage battery as much as possible without considering the working interval of the engine.

A specific vehicle parameter is further considered for a specific charging and discharging policy, and the specific policy is as follows.

Specifically, after the high-voltage battery is controlled to enter the active discharging mode, in response to that the required torque of the overall vehicle is smaller than a maximal torque of the motor, the opening degree of the accelerator pedal is smaller than the engine startup pedal opening degree threshold , and a vehicle speed is smaller than a engine startup vehicle speed threshold , at this time, the vehicle is in the motor driven mode only, and the discharging current of the high-voltage battery is determined on the basis that the torque of the motor is equal to the required torque of the overall vehicle; and in response to that the required torque of the overall vehicle is larger than the maximal torque of the motor, or the opening degree of the accelerator pedal is larger than the engine startup pedal opening degree threshold , or the vehicle speed is larger than the engine startup vehicle speed threshold , at this time, the vehicle is in the hybrid driven mode, the high-voltage battery is discharged in priority, and the discharging current of the high-voltage battery is determined on the basis that the torque of the motor is equal to the maximal torque of the motor.

After the high-voltage battery is controlled to enter the passive discharging mode, in response to that the required torque of the overall vehicle is smaller than the engine startup torque threshold , and the opening degree of the accelerator pedal is smaller than the engine startup pedal opening degree threshold , at this time, the vehicle is in the pure electric driven mode, and the discharging current of the high-voltage battery is determined on the basis that the torque of the motor is equal to the required torque of the overall vehicle; and in response to that the required torque of the overall vehicle is larger than the engine startup torque threshold , or the opening degree of the accelerator pedal is larger than the engine startup pedal opening degree threshold , at this time, the vehicle is in the hybrid driven mode, the motor is distributed the torque in priority, the high-voltage battery is discharged, and the discharging current of the high-voltage battery is determined on the basis that the torque of the motor is equal to the difference obtained by subtracting the request torque of the engine from the required torque of the overall vehicle.

After the high-voltage battery is controlled to enter the electric quantity holding mode, a charging power satisfies a consumed power of high-voltage accessories such as DCDC, PTC and CMP, and the charging current of the high-voltage battery is determined on the basis that the torque of the motor is equal to a required torque of the consumed power of the high-voltage accessories.

After the high-voltage battery is controlled to enter the general efficiency charging mode, except satisfying the consumed power of the high-voltage accessories such as DCDC, PTC and CMP, the charging power further requires to determine a charging and assistance state of the motor according to the high efficiency working interval of the engine; the charging current of the high-voltage battery is determined on the basis that the torque of the motor is equal to the difference obtained by subtracting the optimal torque of the current rotating speed of the engine from the required torque of the engine; and if the torque of the motor is positive, the motor is in the assistance state, and if the torque of the motor is negative, the motor is in a power generation state.

After the high-voltage battery is controlled to enter the high efficiency charging mode, at this time, the SOC has already been lower than the desired SOC, so that there is a need for properly increasing the charging power of the motor and lowering the assistance power according to the high efficiency working interval of the engine; the charging current of the high-voltage battery is determined on the basis that the torque of the motor is equal to the difference obtained by subtracting the optimal torque of the current rotating speed of the engine and a high efficiency charging compensation torque from the required torque of the engine; and if the torque of the motor is positive, the motor is in the assistance state, and if the torque of the motor is negative, the motor is in the power generation state.

After the high-voltage battery is controlled to enter the forced charging mode, at this time, the SOC has already approached an SOC lower threshold of the high-voltage battery, so that without considering the high efficiency working interval of the engine, the charging power of the motor is increased as much as possible, and high-voltage battery is rapidly charged; and the charging current of the high-voltage battery is determined on the basis that the torque of the motor is equal to a required torque of a forced charging power at the current rotating speed.

As a further improvement, the technical solution provided by this embodiment more refines the charging and discharging mode and different charging and discharging policies correspond to different charging and discharging modes, which may achieve more full utilization of the electric quantity of the high-voltage battery under different working condition in various stages and better improve the economy.

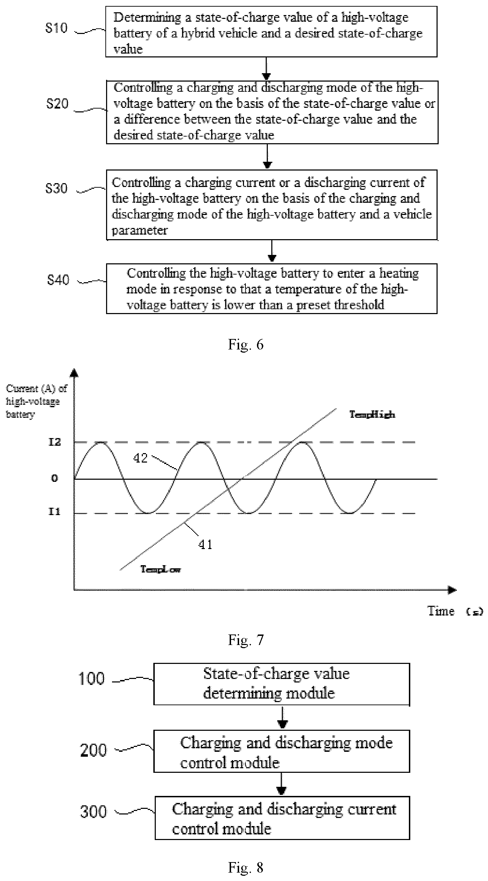

Fig. 6 shows a flow chart of a charging and discharging control method for a high-voltage battery of a hybrid vehicle according to another embodiment of the present disclosure.

On the basis of the embodiment provided in the Fig. 2 or Fig. 4, the method further comprises: step 140, controlling the high-voltage battery to enter a heating mode in response to that the temperature of the high-voltage battery is lower than a preset threshold.

In the battery heating mode, periodic charging and discharging is used for heating the high-voltage battery.

Fig. 7 shows a schematic diagram of a temperature curve for a high-voltage battery according to one embodiment of the present disclosure. As shown in Fig. 7, when the temperature of the high-voltage battery is lower than a certain low temperature threshold (TempLow), the vehicle enters the battery heating mode, the temperature of the high-voltage battery rapidly rises by periodically charging and discharging the battery in this mode until the temperature of the high-voltage battery is higher than a certain high temperature threshold (TempHigh), and thus the working efficiency of the high-voltage battery is improved, wherein a line 41 represents the temperature of high-voltage battery, a curve 42 represents a current of the high-voltage battery, I1 represents a maximal value of the discharging current of the high-voltage battery during battery heating, and I2 represents a maximal value of the charging current of the high-voltage battery during battery heating.

It should be noted that implementation of the steps is not limited to directions of arrows. With the step S140 as an example, the step S140 has a relatively high priority; and no matter which one of the foregoing steps is executed, if the temperature of the high-voltage battery is detected to be lower than the preset threshold, the method may enter the step S140.

An electronic device is disclosed, comprising a memory, a processor and computer programs which are stored in the memory and may run on the processor. When the processor executes the computer programs, the steps of the foregoing method are implemented.

A computer readable storage medium is disclosed, in which processor programs are stored. The processor programs are used for executing the foregoing method.

The memory may be used for storing software programs, computer executable programs and modules as a non-transitory computer readable memory.

The processor performs a variety of function applications and data processing by running the software programs, instructions and data stored in a storage medium, that is, the methods described by the foregoing embodiments are implemented.

The memory may comprise a program storage region and a data storage region, wherein the program storage region may store an operating system and an application program required by at least one function; and the data storage region may store data created according to use of an electronic component. In addition, the memory may include a high speed random access memory, and may further include a non-transitory memory such as at least one disk memory device, a flash memory device or other non-transitory solid stage memories. In some embodiments, alternatively, the memory comprises the memories remotely located from the processor, and these remote memories may be connected to the electronic device through a network.

### Embodiment 2

Fig. 8 shows a schematic diagram of a charging and discharging control device for a high-voltage battery of a hybrid vehicle according to one embodiment of the present disclosure. The charging and discharging control device comprises a state-of-charge value determining module 100, a charging and discharging mode control module 200 and a charging and discharging current control module 300.

The state-of-charge value determining module 100 is used for determining a state-of-charge value of the high-voltage battery of the hybrid vehicle and a desired state-of-charge value. The charging and discharging mode control module 200 is used for controlling a charging and discharging mode of the high-voltage battery on the basis of the state-of-charge value of the high-voltage battery or a difference between the state-of-charge value of the high-voltage battery and the desired state-of-charge value. The charging and discharging current control module 300 is used for controlling a charging current or a discharging current of the high-voltage battery on the basis of the charging and discharging mode of the high-voltage battery and a vehicle parameter.

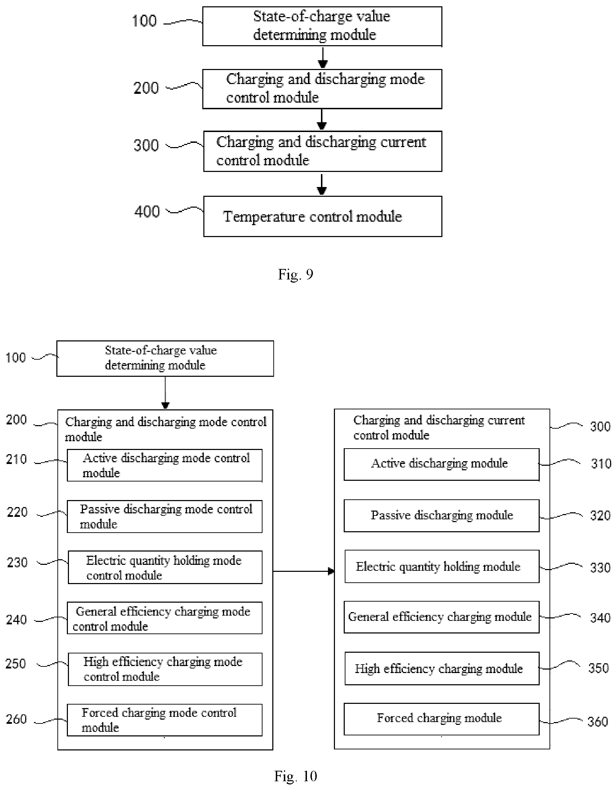

Fig. 9 shows a schematic diagram of a charging and discharging control device for a high-voltage battery of a hybrid vehicle according to another embodiment of the present disclosure. The charging and discharging control device comprises a state-of-charge value determining module 100, a charging and discharging mode control module 200, a charging and discharging current control module 300 and a temperature control module 400.

The state-of-charge value determining module 100 is used for determining the state-of-charge value of the high-voltage battery of the hybrid vehicle and the desired state-of-charge value. The charging and discharging mode control module 200 is used for controlling a charging and discharging mode of the high-voltage battery on the basis of the state-of-charge value of the high-voltage battery or a difference between the state-of-charge value of the high-voltage battery and the desired state-of-charge value. The charging and discharging current control module 300 is used for controlling a charging current or a discharging current of the high-voltage battery on the basis of the charging and discharging mode of the high-voltage battery and a vehicle parameter. The temperature control module 400 is used for controlling the high-voltage battery to enter the heating mode in response to that the temperature of the high-voltage battery is lower than the preset threshold.

Fig. 10 shows a schematic diagram of a charging and discharging control device for a high-voltage battery of a hybrid vehicle according to yet another embodiment of the present disclosure. The charging and discharging control device comprises a state-of-charge value determining module 100, a charging and discharging mode control module 200 and a charging and discharging current control module 300.

The state-of-charge value determining module 100 is used for determining the state-of-charge value of the high-voltage battery of the hybrid vehicle and the desired state-of-charge value. The charging and discharging mode control module 200 is used for controlling a charging and discharging mode of the high-voltage battery on the basis of the state-of-charge value of the high-voltage battery or a difference between the state-of-charge value of the high-voltage battery and the desired state-of-charge value. The charging and discharging current control module 300 is used for controlling a charging current or a discharging current of the high-voltage battery on the basis of the charging and discharging mode of the high-voltage battery and a vehicle parameter.

The charging and discharging mode control module 200 comprises an active discharging mode control module 210, a passive discharging mode control module 220, an electric quantity holding mode control module 230, a general efficiency charging mode control module 240, a high efficiency charging mode control module 250 and a forced charging mode control module 260.

The active discharging mode control module 210 is used for controlling the high-voltage battery to enter the active discharging mode in response to that the state-of-charge value of the high-voltage battery is larger than an active discharging threshold, or the difference between the state-of-charge value of the high-voltage battery and the desired state-of-charge value is larger than an active discharging difference threshold.

The passive discharging mode control module 220 is used for controlling the high-voltage battery to enter the passive discharging mode in response to that the state-of-charge value of the high-voltage battery is smaller than the active discharging threshold and larger than the passive discharging threshold, or the difference between the state-of-charge value of the high-voltage battery and the desired state-of-charge value is smaller than the active discharging difference threshold and larger than the passive discharging difference threshold.

The electric quantity holding mode control module 230 is used for controlling the high-voltage battery to enter the electric quantity holding mode in response to that the state-of-charge value of the high-voltage battery is smaller than the passive discharging threshold and larger than the electric quantity holding threshold, or the difference between the state-of-charge value of the high-voltage battery and the desired state-of-charge value is smaller than the passive discharging difference threshold and larger than the electric quantity holding difference threshold.

The general efficiency charging mode control module 240 is used for controlling the high-voltage battery to enter the general efficiency charging mode in response to that the state-of-charge value of the high-voltage battery is smaller than the electric quantity holding threshold and larger than an efficiency charging threshold, or the difference between the state-of-charge value of the high-voltage battery and the desired state-of-charge value is smaller than the electric quantity holding difference threshold and larger than an efficiency charging difference threshold.

The high efficiency charging mode control module 250 is used for controlling the high-voltage battery to enter the high efficiency charging mode in response to that the state-of-charge value of the high-voltage battery is smaller than the efficiency charging threshold and larger than a forced charging threshold, or the difference between the state-of-charge value of the high-voltage battery and the desired state-of-charge value is smaller than the efficiency charging difference threshold and larger than a forced charging difference threshold.

The forced charging mode control module 260 is used for controlling the high-voltage battery to enter the forced charging mode in response to that the state-of-charge value of the high-voltage battery is smaller than the forced charging threshold, or the difference between the state-of-charge value of the high-voltage battery and the desired state-of-charge value is smaller than the forced charging difference threshold.

The charging and discharging current control module 300 comprises an active discharging module 310, a passive discharging module 320, an electric quantity holding module 330, a general efficiency charging module 340, a high efficiency charging module 350 and a forced charging module 360.

In the active discharging mode, the active discharging module 310 is used for determining the discharging current of the high-voltage battery on the basis that the torque of the motor is equal to the required torque of the overall vehicle in response to that the required torque of the overall vehicle is smaller than a maximal torque of the motor, the opening degree of the accelerator pedal is smaller than the engine startup pedal opening degree threshold , and a vehicle speed is smaller than a engine startup vehicle speed threshold ; and determining the discharging current of the high-voltage battery on the basis that the torque of the motor is equal to the maximal torque of the motor in response to that the required torque of the overall vehicle is larger than the maximal torque of the motor, or the opening degree of the accelerator pedal is larger than the engine startup pedal opening degree threshold , or the vehicle speed is larger than the engine startup vehicle speed threshold .

In the passive discharging mode, the passive discharging module 320 is used for determining the discharging current of the high-voltage battery on the basis that the torque of the motor is equal to the required torque of the overall vehicle in response to that the required torque of the overall vehicle is smaller than the engine startup torque threshold , and the opening degree of the accelerator pedal is smaller than the engine startup pedal opening degree threshold ; and determining the discharging current of the high-voltage battery on the basis that the torque of the motor is equal to the difference obtained by subtracting the request torque of the engine from the required torque of the overall vehicle in response to that the required torque of the overall vehicle is larger than the engine startup torque threshold , or the opening degree of the accelerator pedal is larger than the engine startup pedal opening degree threshold .

In the electric quantity holding mode, the electric quantity holding module 330 is used for determining the charging current of the high-voltage battery on the basis that the torque of the motor is equal to a required torque of a consumed power of high-voltage accessories.

In a general efficiency charging mode, the general efficiency charging module 340 is used for determining the charging current of the high-voltage battery on the basis that the torque of the motor is equal to the difference obtained by subtracting an optimal torque of a current rotating speed of the engine from the required torque of the engine.

In a high efficiency charging mode, the high efficiency charging module 350 is used for determining the charging current of the high-voltage battery on the basis that the torque of the motor is equal to a difference obtained by subtracting the optimal torque of the current rotating speed of the engine and a high efficiency charging compensation torque from the required torque of the engine.

In a forced charging mode, the forced charging module 360 is used for determining the charging current of the high-voltage battery on the basis that the torque of the motor is equal to a required torque of a forced charging power at the current rotating speed.

By employing the technical solution provided by the embodiments of the present disclosure, the charging and discharging mode of the high-voltage battery is controlled on the basis of a parameter of the state-of-charge value of the high-voltage battery of the hybrid vehicle, and different charging and discharging policies are used for different charging and discharging modes, so that staged precision control is achieved, the economy is better improved, and the device is wide in application range and may be applied to hybrid vehicles of various architectures.

The descriptions above are only preferred embodiments of the present disclosure, but are not intended to limit the present disclosure; and any modifications, equivalent substitutions, improvements and the like made within the principles of the present disclosure are all intended to be concluded in the protection scope of the present disclosure.

Embodiments of various components of the present application may be implemented in hardware, or as software modules running on one or more processors, or on a combination thereof. Those skilled in the art should appreciate that some or all functions of some or all components in charging and discharging control apparatus for the high-voltage battery according to the embodiments of the present application may be implemented by using a microprocessor or a digital signal processor (DSP) in practice. The present application may further be implemented to be used for executing a part of all apparatus or device programs (for example, computer programs and computer program products) in the method described herein. The programs, implementing the present application in such a way, may be stored in the computer readable medium or may be in a form of one or more signals. Such signals may be downloaded from Internet sites, or may be provided on a carrier signal, or may be provided in any other forms.

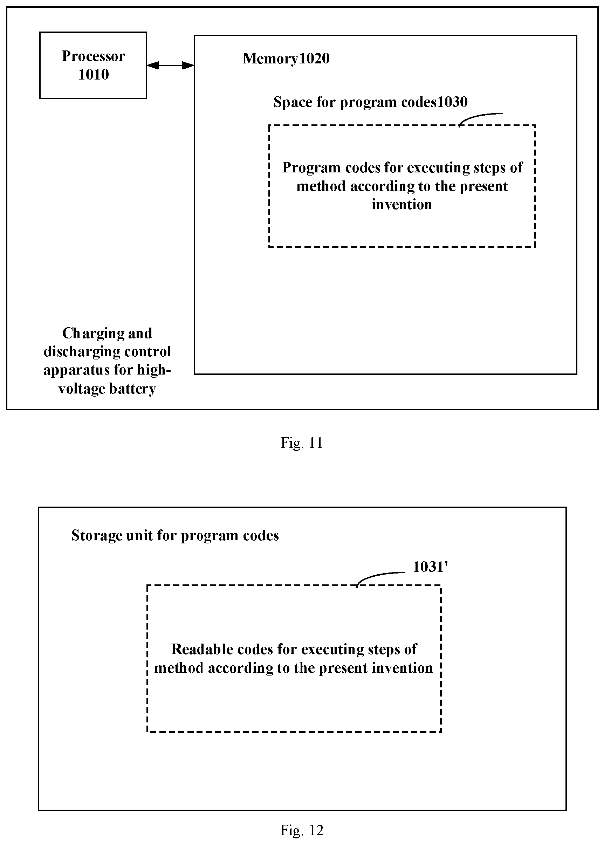

For example, Fig. 11 shows a charging and discharging control apparatus for a high-voltage battery for implementing the method according to the present application. The charging and discharging control apparatus for the high-voltage battery traditionally comprises a processor 1010 and a computer program product in a form of a memory 1020 or a computer readable medium. The memory 1020 may be an electronic memory such as the flash memory, an electrically erasable programmable read-only memory (EEPROM), an erasable programmable read-only memory (EPROM) or an ROM. The memory 1020 has a memory space 1030 used for executing program codes 1031 of any method step in the above method. For example, the memory space 1030 for the program code may comprise various program codes 1031 for implementing various steps in the above method. These program codes may be read from one or more computer program products or written into the one or more computer program products. These computer program products comprise program code carriers such as a hard disk, a compact disk (CD), a memory card or a floppy disk. Such computer program products are portable or stationary storage units described in reference to Fig. 12 generally. The storage unit may have a memory paragraph, a memory space and the like with an arrangement similar to the memory 1020 in the charging and discharging control apparatus for the high-voltage battery in Fig. 11. The program codes may be compressed, for example, in a proper form. Generally, the storage unit comprises computer readable codes 1031', i.e. codes, for example, which may be read by the processor, such as 1010. When these codes are run by the charging and discharging control apparatus of the high-voltage battery, the charging and discharging control apparatus of the high-voltage battery executes various steps in the method described above.

The described "one embodiment", "embodiments" or "one or more embodiments" herein means that the specific features, structures or characteristics described in combination with the embodiments are included in at least one embodiment of the present application. Moreover, noted, phrase examples of "in one embodiment" here are not all necessarily referring to the same embodiment.

Numerous specific details are described in the specification provided here. However, it can be understood that the embodiments may be practiced without these specific details. In some examples, well-known methods, structures and technologies have not been shown in detail in order not to obscure the understanding of this specification.

In the claims, any reference signs placed between parentheses shall not be constructed as limiting the claims. The word "comprising" does not exclude the presence of other elements or steps not listed in the claims. The word "a" or "an" before an element does not exclude the presence of a plurality of such elements. The present application may be achieved by means of hardware comprising several different elements and by means of an appropriately programmed computer. In unit claims listing several devices, several of these devices may be embodied by one and the same item of hardware. Use of the words first, second and third, etc. does not indicate any ordering. These words may be interpreted as names.

Finally, it should be noted that, the above are only preferred embodiments of the present disclosure and are not intended to limit the present disclosure. Although the present disclosure has been described in detail with respect to the previously described embodiments, to those skilled in the art, the technical solutions recorded in the embodiments may be still modified, or part of its technical features may be replaced with equivalents. Any modifications, equivalent substitutions, improvements and the like within the scope of the claims are intended to be included in the protection range of the present disclosure.

## Claims

1. A charging and discharging control method for a high-voltage battery of a hybrid vehicle, comprising:
determining a state-of-charge value of the high-voltage battery of the hybrid vehicle and a desired state-of-charge value;
controlling a charging and discharging mode of the high-voltage battery on the basis of the state-of-charge value of the high-voltage battery or a difference between the state-of-charge value of the high-voltage battery and the desired state-of-charge value; and
controlling a charging current or a discharging current of the high-voltage battery on the basis of the charging and discharging mode of the high-voltage battery and a vehicle parameter,
**characterized in that** the charging and discharging mode comprises: a discharging mode, an electric quantity holding mode, an efficiency charging mode and a forced charging mode,
wherein
the discharging mode comprises: an active discharging mode and a passive discharging mode; and
the efficiency charging mode comprises: a general efficiency charging mode and a high efficiency charging mode,
wherein controlling the charging and discharging mode of the high-voltage battery on the basis of the state-of-charge value of the high-voltage battery or the difference between the state-of-charge value of the high-voltage battery and the desired state-of-charge value comprises:
controlling the high-voltage battery to enter the active discharging mode in response to that the state-of-charge value of the high-voltage battery is larger than an active discharging threshold, or the difference between the state-of-charge value of the high-voltage battery and the desired state-of-charge value is larger than an active discharging difference threshold;
controlling the high-voltage battery to enter the passive discharging mode in response to that the state-of-charge value of the high-voltage battery is smaller than the active discharging threshold and larger than a passive discharging threshold, or the difference between the state-of-charge value of the high-voltage battery and the desired state-of-charge value is smaller than the active discharging difference threshold and larger than a passive discharging difference threshold;
controlling the high-voltage battery to enter the electric quantity holding mode in response to that the state-of-charge value of the high-voltage battery is smaller than the passive discharging threshold and larger than the electric quantity holding threshold, or the difference between the state-of-charge value of the high-voltage battery and the desired state-of-charge value is smaller than the passive discharging difference threshold and larger than an electric quantity holding difference threshold;
controlling the high-voltage battery to enter the general efficiency charging mode in response to that the state-of-charge value of the high-voltage battery is smaller than the electric quantity holding threshold and larger than an efficiency charging threshold, or the difference between the state-of-charge value of the high-voltage battery and the desired state-of-charge value is smaller than the electric quantity holding difference threshold and larger than an efficiency charging difference threshold;
controlling the high-voltage battery to enter the high efficiency charging mode in response to that the state-of-charge value of the high-voltage battery is smaller than the efficiency charging threshold and larger than a forced charging threshold, or the difference between the state-of-charge value of the high-voltage battery and the desired state-of-charge value is smaller than the efficiency charging difference threshold and larger than the forced charging difference threshold; and
controlling the high-voltage battery to enter the forced charging mode in response to that the state-of-charge value of the high-voltage battery is smaller than the forced charging threshold, or the difference between the state-of-charge value of the high-voltage battery and the desired state-of-charge value is smaller than the forced charging difference threshold,
wherein
determining the charging current or the discharging current of the high-voltage battery on the basis of the charging and discharging mode of the high-voltage battery and the vehicle parameter after controlling the high-voltage battery to enter the active discharging mode comprises:
determining the discharging current of the high-voltage battery on the basis that the torque of the motor is equal to the required torque of the overall vehicle in response to that the required torque of the overall vehicle is smaller than a maximal torque of the motor, the opening degree of the accelerator pedal is smaller than the engine startup pedal opening degree threshold , and the vehicle speed is smaller than a engine startup vehicle speed threshold ;
determining the discharging current of the high-voltage battery on the basis that the torque of the motor is equal to the maximal torque of the motor in response to that the required torque of the overall vehicle is larger than the maximal torque of the motor, or the opening degree of the accelerator pedal is larger than the engine startup pedal opening degree threshold , or the vehicle speed is larger than the engine startup vehicle speed threshold ;
determining the charging current or the discharging current of the high-voltage battery on the basis of the charging and discharging mode of the high-voltage battery and the vehicle parameter after controlling the high-voltage battery to enter the passive discharging mode comprises:
determining the discharging current of the high-voltage battery on the basis that the torque of the motor is equal to the required torque of the overall vehicle in response to that the required torque of the overall vehicle is smaller than the engine startup torque threshold, and the opening degree of the accelerator pedal is smaller than the engine startup pedal opening degree threshold;
determining the discharging current of the high-voltage battery on the basis that the torque of the motor is equal to the difference obtained by subtracting the request torque of the engine from the required torque of the overall vehicle in response to that the required torque of the overall vehicle is larger than the engine startup torque threshold , or the opening degree of the accelerator pedal is larger than the engine startup pedal opening degree threshold ;
determining the charging current or the discharging current of the high-voltage battery on the basis of the charging and discharging mode of the high-voltage battery and the vehicle parameter after controlling the high-voltage battery to enter the electric quantity holding mode comprises:
determining the charging current of the high-voltage battery on the basis that the torque of the motor is equal to the required torque of the consumed power of the high-voltage accessories;
determining the charging current or the discharging current of the high-voltage battery on the basis of the charging and discharging mode of the high-voltage battery and the vehicle parameter after controlling the high-voltage battery to enter the general efficiency charging mode comprises:
determining the charging current of the high-voltage battery on the basis that the torque of the motor is equal to the difference obtained by subtracting the optimal torque of the current rotating speed of the engine from the required torque of the engine;
determining the charging current or the discharging current of the high-voltage battery on the basis of the charging and discharging mode of the high-voltage battery and the vehicle parameter after controlling the high-voltage battery to enter the high efficiency charging mode comprises:
determining the charging current of the high-voltage battery on the basis that the torque of the motor is equal to a difference obtained by subtracting the optimal torque of the current rotating speed of the engine and a high efficiency charging compensation torque from the required torque of the engine;
determining the charging current or the discharging current of the high-voltage battery on the basis of the charging and discharging mode of the high-voltage battery and the vehicle parameter after controlling the high-voltage battery to enter the forced charging mode comprises:
determining the charging current of the high-voltage battery on the basis that the torque of the motor is equal to the required torque of the forced charging power at the current rotating speed.

2. The method according to claim 1, wherein the method further comprises:
controlling the high-voltage battery to enter a heating mode in response to that a temperature of the high-voltage battery is lower than a preset threshold.

3. A charging and discharging control device for a high-voltage battery of a hybrid vehicle, comprising:
a state-of-charge value determining module (100) for determining the state-of-charge value of the high-voltage battery of the hybrid vehicle and the desired state-of-charge value;
a charging and discharging mode control module (200) for controlling the charging and discharging mode of the high-voltage battery on the basis of the state-of-charge value of the high-voltage battery or a difference between the state-of-charge value of the high-voltage battery and the desired state-of-charge value; and
a charging and discharging current control module (300) for controlling the charging current or the discharging current of the high-voltage battery on the basis of the charging and discharging mode of the high-voltage battery and the vehicle parameter,
wherein
the charging and discharging mode control module (200) comprises an active discharging mode control module (210), a passive discharging mode control module (220), an electric quantity holding mode control module (230), a general efficiency charging mode control module (240), a high efficiency charging mode control module (250) and a forced charging mode control module (260),
**characterized in that**
the charging and discharging control device being adapted to perform the charging and discharging control method of claim 1 or 2.

4. The device according to claim 3, wherein the device further comprises:
a temperature control module (400) for controlling the high-voltage battery to enter a heating mode in response to that the temperature of the high-voltage battery is lower than the preset threshold.

5. A computer program, comprising computer readable codes; when the computer readable codes are run on a charging and discharging control apparatus of the high-voltage battery, the charging and discharging control apparatus of the high-voltage battery executes the charging and discharging control method for the high-voltage battery in claim 1 or 2.

6. A computer readable medium for storing the computer program according to claim 5 therein.

## Patentansprüche

1. Lade- und Entladesteuerungsverfahren für eine Hochvoltbatterie eines Hybridfahrzeugs, umfassend:
Bestimmen eines Ladezustandswerts der Hochvoltbatterie des Hybridfahrzeugs und eines gewünschten Ladezustandswerts;
Steuern eines Lade- und Entlademodus der Hochvoltbatterie gemäß dem Ladezustandswert der Hochvoltbatterie oder einer Differenz zwischen dem Ladezustandswert der Hochvoltbatterie und dem gewünschten Ladezustandswert; und
Steuern eines Ladestroms oder eines Entladestroms der Hochvoltbatterie gemäß dem Lade- und Entlademodus der Hochvoltbatterie und einem Fahrzeugparameter,
**dadurch gekennzeichnet, dass** der Lade- und Entlademodus einen Entlademodus, einen Ladeerhaltungsmodus, einen Effizienz-Lademodus und einen Zwangslademodus beinhaltet,
wobei der Entlademodus einen aktiven Entlademodus und einen passiven Entlademodus und der Effizienz-Lademodus einen allgemeinen Effizienz-Lademodus und einen Hocheffizienz-Lademodus umfasst,
wobei das Steuern des Lade- und Entlademodus der Hochvoltbatterie gemäß dem Ladezustandswert der Hochvoltbatterie oder der Differenz zwischen dem Ladezustandswert der Hochvoltbatterie und dem gewünschten Ladezustandswert beinhaltet:
Steuern der Hochvoltbatterie, um in den aktiven Entlademodus zu wechseln, wenn der Ladezustandswert der Hochvoltbatterie einen aktiven Entlade-Schwellenwert überschreitet oder die Differenz zwischen dem Ladezustandswert der Hochvoltbatterie und dem gewünschten Ladezustandswert einen aktiven Entlade-Differenzschwellenwert überschreitet;
Steuern der Hochvoltbatterie, um in den passiven Entlademodus zu wechseln, wenn der Ladezustandswert der Hochvoltbatterie den aktiven Entlade-Schwellenwert unterschreitet und einen passiven Entlade-Schwellenwert überschreitet oder die Differenz zwischen dem Ladezustandswert der Hochvoltbatterie und dem gewünschten Ladezustandswert den aktiven Entlade-Differenzschwellenwert unterschreitet und einen passiven Entlade-Differenzschwellenwert überschreitet;
Steuern der Hochvoltbatterie, um in den Ladeerhaltungsmodus zu wechseln, wenn der Ladezustandswert der Hochvoltbatterie den passiven Entlade-Schwellenwert unterschreitet und den Ladeerhaltung-Schwellenwert überschreitet oder die Differenz zwischen dem Ladezustandswert der Hochvoltbatterie und dem gewünschten Ladezustandswert den passiven Entlade-Differenzschwellenwert unterschreitet und einen Ladeerhaltung-Differenzschwellenwert überschreitet;
Steuern der Hochvoltbatterie, um in den allgemeinen Effizienz-Lademodus zu wechseln, wenn der Ladezustandswert der Hochvoltbatterie den Ladeerhaltung-Schwellenwert unterschreitet und einen Effizienzladung-Schwellenwert überschreitet oder die Differenz zwischen dem Ladezustandswert der Hochvoltbatterie und dem gewünschten Ladezustandswert den Ladeerhaltung-Differenzschwellenwert unterschreitet und einen Effizienzladung-Differenzschwellenwert überschreitet;
Steuern der Hochvoltbatterie, um in den Hocheffizienz-Lademodus zu wechseln, wenn der Ladezustandswert der Hochvoltbatterie den Effizienzladung-Schwellenwert unterschreitet und einen Zwangsladung-Schwellenwert überschreitet oder die Differenz zwischen dem Ladezustandswert der Hochvoltbatterie und dem gewünschten Ladezustandswert den Effizienzladung-Differenzschwellenwert unterschreitet und den Zwangsladung-Differenzschwellenwert überschreitet; und
Steuern der Hochvoltbatterie, um in den Zwangslademodus zu wechseln, wenn der Ladezustandswert der Hochvoltbatterie den Zwangsladung-Schwellenwert unterschreitet oder die Differenz zwischen dem Ladezustandswert der Hochvoltbatterie und dem gewünschten Ladezustandswert den Zwangsladung-Differenzschwellenwert unterschreitet,
wobei
nachdem die Hochvoltbatterie angesteuert worden ist, um in den aktiven Entlademodus zu wechseln, das Bestimmen des Ladestroms oder des Entladestroms der Hochvoltbatterie gemäß dem Lade- und Entlademodus der Hochvoltbatterie und dem Fahrzeugparameter umfasst:
Bestimmen des Entladestroms der Hochvoltbatterie, wenn das Drehmoment des Elektromotors gleich dem erforderlichen Drehmoment des Gesamtfahrzeugs ist, sofern das erforderliche Drehmoment des Gesamtfahrzeugs geringer als ein maximales Drehmoment des Elektromotors ist, der Gaspedal-Öffnungsgrad geringer als der für einen Verbrennungsmotorstart erforderliche Schwellenwert des Gaspedal-Öffnungsgrads ist und die Fahrzeuggeschwindigkeit geringer als ein für einen Verbrennungsmotorstart erforderlicher Schwellenwert der Fahrzeuggeschwindigkeit ist;
Bestimmen des Entladestroms der Hochvoltbatterie, wenn das Drehmoment des Elektromotors gleich dem maximalen Drehmoment des Elektromotors ist, sofern das erforderliche Drehmoment des Gesamtfahrzeugs höher als das maximale Drehmoment des Elektromotors ist oder der Gaspedal-Öffnungsgrad höher als der für einen Verbrennungsmotorstart erforderliche Schwellenwert des Gaspedal-Öffnungsgrads ist oder die Fahrzeuggeschwindigkeit höher als der für einen Verbrennungsmotorstart erforderliche Schwellenwert der Fahrzeuggeschwindigkeit ist;
nachdem die Hochvoltbatterie angesteuert worden ist, um in den passiven Entlademodus zu wechseln, das Bestimmen des Ladestroms oder des Entladestroms der Hochvoltbatterie gemäß dem Lade- und Entlademodus der Hochvoltbatterie und dem Fahrzeugparameter umfasst:
Bestimmen des Entladestroms der Hochvoltbatterie, wenn das Drehmoment des Elektromotors gleich dem erforderlichen Drehmoment des Gesamtfahrzeugs ist, sofern das erforderliche Drehmoment des Gesamtfahrzeugs geringer als der für einen Verbrennungsmotorstart erforderliche Schwellenwert des Drehmoments ist und der Gaspedal-Öffnungsgrad geringer als der für einen Verbrennungsmotorstart erforderliche Schwellenwert des Gaspedal-Öffnungsgrads ist;
Bestimmen des Entladestroms der Hochvoltbatterie, wenn das Drehmoment des Elektromotors gleich der Differenz ist, die sich aus der Subtraktion des Anforderungsdrehmoments des Verbrennungsmotors von dem erforderlichen Drehmoment des Gesamtfahrzeugs ergibt, sofern das erforderliche Drehmoment des Gesamtfahrzeugs höher als der für einen Verbrennungsmotorstart erforderliche Schwellenwert des Drehmoments ist oder der Gaspedal-Öffnungsgrad höher als der für einen Verbrennungsmotorstart erforderliche Schwellenwert des Gaspedal-Öffnungsgrads ist;
nachdem die Hochvoltbatterie angesteuert worden ist, um in den Ladeerhaltungsmodus zu wechseln, das Bestimmen des Ladestroms oder des Entladestroms der Hochvoltbatterie gemäß dem Lade- und Entlademodus der Hochvoltbatterie und dem Fahrzeugparameter umfasst:
Bestimmen des Ladestroms der Hochvoltbatterie, wenn das Drehmoment des Elektromotors gleich dem Drehmoment ist, das durch die Leistungsaufnahme der Hochvolt-Nebenaggregate erforderlich ist;
nachdem die Hochvoltbatterie angesteuert worden ist, um in den allgemeinen Effizienzlademodus zu wechseln, das Bestimmen des Ladestroms oder des Entladestroms der Hochvoltbatterie gemäß dem Lade- und Entlademodus der Hochvoltbatterie und dem Fahrzeugparameter umfasst:
Bestimmen des Ladestroms der Hochvoltbatterie, wenn das Drehmoment des Elektromotors gleich der Differenz ist, die sich aus der Subtraktion des optimalen Drehmoments bei der aktuellen Drehzahl des Verbrennungsmotors von dem erforderlichen Drehmoment des Verbrennungsmotors ergibt;
nachdem die Hochvoltbatterie angesteuert worden ist, um in den Hocheffizienzlademodus zu wechseln, das Bestimmen des Ladestroms oder des Entladestroms der Hochvoltbatterie gemäß dem Lade- und Entlademodus der Hochvoltbatterie und dem Fahrzeugparameter umfasst:
Bestimmen des Ladestroms der Hochvoltbatterie, wenn das Drehmoment des Elektromotors gleich der Differenz ist, die sich aus der Subtraktion des optimalen Drehmoments bei der aktuellen Drehzahl des Verbrennungsmotors und eines Hocheffizienzlade-Kompensationsdrehmoments von dem erforderlichen Drehmoment des Verbrennungsmotors ergibt;
nachdem die Hochvoltbatterie angesteuert worden ist, um in den Zwangslademodus zu wechseln, das Bestimmen des Ladestroms oder des Entladestroms der Hochvoltbatterie gemäß dem Lade- und Entlademodus der Hochvoltbatterie und dem Fahrzeugparameter umfasst:
Bestimmen des Ladestroms der Hochvoltbatterie, wenn das Drehmoment des Elektromotors gleich dem Drehmoment ist, das durch die erzwungene Ladeleistung bei der aktuellen Drehzahl erforderlich ist.

2. Verfahren nach Anspruch 1, wobei das Verfahren ferner das Steuern der Hochvoltbatterie umfasst, um sie in einen Heizmodus zu wechseln, wenn eine Temperatur der Hochvoltbatterie einen vorgegebenen Schwellenwert unterschreitet.

3. Lade- und Entladesteuerungsvorrichtung für eine Hochvoltbatterie eines Hybridfahrzeugs, umfassend:
ein Ladezustandswert-Bestimmungsmodul (100) zum Bestimmen des Ladezustandswerts der Hochvoltbatterie des Hybridfahrzeugs und des gewünschten Ladezustandswerts;
ein Lade- und Entlademodus-Steuermodul (200) zum Steuern des Lade- und Entlademodus der Hochvoltbatterie gemäß dem Ladezustandswert der Hochvoltbatterie oder einer Differenz zwischen dem Ladezustandswert der Hochvoltbatterie und dem gewünschten Ladezustandswert; und
ein Lade- und Entladestrom-Steuermodul (300) zum Steuern des Ladestroms oder des Entladestroms der Hochvoltbatterie gemäß dem Lade- und Entlademodus der Hochvoltbatterie und dem Fahrzeugparameter,
wobei
das Lade- und Entlademodus-Steuermodul (200) ein aktives Entlademodus-Steuermodul (210), ein passives Entlademodus-Steuermodul (220), ein Ladeerhaltungsmodus-Steuermodul (230), ein allgemeines Effizienz-Lademodus-Steuermodul (240), ein Hocheffizienzlademodus-Steuermodul (250) sowie ein Zwangslademodus-Steuermodul (260) beinhaltet,
**dadurch gekennzeichnet, dass** die Lade- und Entladesteuerungsvorrichtung dazu eingerichtet ist, das Lade- und Entladesteuerungsverfahren nach Anspruch 1 oder 2 durchzuführen.

4. Vorrichtung nach Anspruch 3, wobei die Vorrichtung ferner ein Temperatursteuermodul (400) umfasst, das dazu eingerichtet ist, die Hochvoltbatterie in einen Heizmodus zu wechseln, wenn die Temperatur der Hochvoltbatterie den vorgegebenen Schwellenwert unterschreitet.

5. Computerprogramm mit computerlesbarem Code, der bei Ausführung auf einer Lade- und Entladesteuerungsvorrichtung der Hochvoltbatterie die Vorrichtung veranlasst, das Lade- und Entladesteuerungsverfahren nach Anspruch 1 oder 2 auszuführen.

6. Computerlesbares Speichermedium zum Speichern des Computerprogramms nach Anspruch 5.

## Revendications

1. Procédé de commande de charge et de décharge d'une batterie haute tension d'un véhicule hybride, comprenant les étapes consistant à :
déterminer une valeur d'état de charge de la batterie haute tension du véhicule hybride et une valeur d'état de charge souhaitée ;
commander un mode de charge et de décharge de la batterie haute tension sur la base de la valeur d'état de charge de la batterie haute tension ou d'une différence entre la valeur d'état de charge de la batterie haute tension et la valeur d'état de charge souhaitée ; et
réguler un courant de charge ou un courant de décharge de la batterie haute tension sur la base du mode de charge et de décharge de la batterie haute tension et d'un paramètre de véhicule,
**caractérisé en ce que** le mode de charge et de décharge comprend : un mode de décharge, un mode de maintien de quantité électrique, un mode de charge axé sur le rendement et un mode de charge forcée,
dans lequel
le mode de décharge comprend : un mode de décharge active et un mode de décharge passive ; et
le mode de charge axé sur le rendement comprend : un mode de charge à rendement commun et un mode de charge à haut rendement,
dans lequel l'étape de commande du mode de charge et de décharge de la batterie haute tension sur la base de la valeur d'état de charge de la batterie haute tension ou de la différence entre la valeur d'état de charge de la batterie haute tension et la valeur d'état de charge souhaitée consiste à :
commander la batterie haute tension pour qu'elle entre dans le mode de décharge active en réponse au fait que la valeur d'état de charge de la batterie haute tension est supérieure à un seuil de décharge active, ou que la différence entre la valeur d'état de charge de la batterie haute tension et la valeur d'état de charge souhaitée est supérieure à un seuil de différence de décharge active ;
commander la batterie haute tension pour qu'elle entre dans le mode de décharge passive en réponse au fait que la valeur d'état de charge de la batterie haute tension est inférieure au seuil de décharge active et supérieure à un seuil de décharge passive, ou que la différence entre la valeur d'état de charge de la batterie haute tension et la valeur d'état de charge souhaitée est inférieure au seuil de différence de décharge active et supérieure à un seuil de différence de décharge passive ;
commander la batterie haute tension pour qu'elle entre dans le mode de maintien de quantité électrique en réponse au fait que la valeur d'état de charge de la batterie haute tension est inférieure au seuil de décharge passive et supérieure au seuil de maintien de quantité électrique, ou que la différence entre la valeur d'état de charge de la batterie haute tension et la valeur d'état de charge souhaitée est inférieure au seuil de différence de décharge passive et supérieure à un seuil de différence de maintien de quantité électrique ;
commander la batterie haute tension pour qu'elle entre dans le mode de charge à rendement commun en réponse au fait que la valeur d'état de charge de la batterie haute tension est inférieure au seuil de maintien de quantité électrique et supérieure à un seuil de charge axée sur le rendement, ou que la différence entre la valeur d'état de charge de la batterie haute tension et la valeur d'état de charge souhaitée est inférieure au seuil de différence de maintien de quantité électrique et supérieure à un seuil de différence de charge axée sur le rendement ;
commander la batterie haute tension pour qu'elle entre dans le mode de charge à haut rendement en réponse au fait que la valeur d'état de charge de la batterie haute tension est inférieure au seuil de charge axée sur le rendement et supérieure à un seuil de charge forcée, ou que la différence entre la valeur d'état de charge de la batterie haute tension et la valeur d'état de charge souhaitée est inférieure au seuil de différence de charge axée sur le rendement et supérieure au seuil de différence de charge forcée ; et
commander la batterie haute tension pour qu'elle entre dans le mode de charge forcée en réponse au fait que la valeur d'état de charge de la batterie haute tension est inférieure au seuil de charge forcée, ou que la différence entre la valeur d'état de charge de la batterie haute tension et la valeur d'état de charge souhaitée est inférieure au seuil de différence de charge forcée,
dans lequel
la détermination du courant de charge ou du courant de décharge de la batterie haute tension sur la base du mode de charge et de décharge de la batterie haute tension et du paramètre de véhicule après la commande de la batterie haute tension pour qu'elle entre dans le mode de décharge active consiste à :
déterminer le courant de charge de la batterie haute tension sur la base du fait que le couple du moteur est égal au couple requis du véhicule total en réponse au fait que le couple requis du véhicule total est inférieur à un couple maximal du moteur, que le degré d'ouverture de la pédale d'accélérateur est inférieur à un seuil de degré d'ouverture de pédale de démarrage de moteur, et que la vitesse de véhicule est inférieure à un seuil de vitesse de véhicule de démarrage de moteur ;
déterminer le courant de décharge de la batterie haute tension sur la base du fait que le couple du moteur est égal au couple maximal du moteur en réponse au fait que le couple requis du véhicule total est supérieur au couple maximal du moteur, ou que le degré d'ouverture de la pédale d'accélérateur est supérieur au seuil de degré d'ouverture de pédale de démarrage de moteur, ou que la vitesse de véhicule est supérieure au seuil de vitesse de véhicule de démarrage de moteur ;
la détermination du courant de charge ou du courant de décharge de la batterie haute tension sur la base du mode de charge et de décharge de la batterie haute tension et du paramètre de véhicule après la commande de la batterie haute tension pour qu'elle entre dans le mode de décharge passive consiste à :
déterminer le courant de décharge de la batterie haute tension sur la base du fait que le couple du moteur est égal au couple requis du véhicule total en réponse au fait que le couple requis du véhicule total est inférieur au seuil de couple de démarrage de moteur, et que le degré d'ouverture de la pédale d'accélérateur est inférieur au seuil de degré d'ouverture de pédale de démarrage de moteur ;
déterminer le courant de décharge de la batterie haute tension sur la base du fait que le couple du moteur est égal à la différence obtenue en soustrayant le couple demandé du moteur du couple requis du véhicule total en réponse au fait que le couple requis du véhicule total est supérieur au seuil de couple de démarrage de moteur, ou que le degré d'ouverture de la pédale d'accélérateur est supérieur au seuil de degré d'ouverture de pédale de démarrage de moteur ;
la détermination du courant de charge ou du courant de décharge de la batterie haute tension sur la base du mode de charge et de décharge de la batterie haute tension et du paramètre de véhicule après la commande de la batterie haute tension pour qu'elle entre dans le mode de maintien de quantité électrique consiste à :
déterminer le courant de charge de la batterie haute tension sur la base du fait que le couple du moteur est égal au couple requis de la puissance consommée d'accessoires haute tension ;
la détermination du courant de charge ou du courant de décharge de la batterie haute tension sur la base du mode de charge et de décharge de la batterie haute tension et du paramètre de véhicule après la commande de la batterie haute tension pour qu'elle entre dans le mode de charge à rendement commun consiste à :
déterminer le courant de charge de la batterie haute tension sur la base du fait que le couple du moteur est égal à la différence obtenue en soustrayant le couple optimal de la vitesse de rotation courante du moteur du couple requis du moteur ;
la détermination du courant de charge ou du courant de décharge de la batterie haute tension sur la base du mode de charge et de décharge de la batterie haute tension et du paramètre de véhicule après la commande de la batterie haute tension pour qu'elle entre dans le mode de charge à haut rendement consiste à :
déterminer le courant de charge de la batterie haute tension sur la base du fait que le couple du moteur est égal à une différence obtenue en soustrayant le couple optimal de la vitesse de rotation courante du moteur et un couple de compensation de charge à haut rendement du couple requis du moteur ;
la détermination du courant de charge ou du courant de décharge de la batterie haute tension sur la base du mode de charge et de décharge de la batterie haute tension et du paramètre de véhicule après la commande de la batterie haute tension pour qu'elle entre dans le mode de charge forcée consiste à :
déterminer le courant de charge de la batterie haute tension sur la base du fait que le couple du moteur est égal au couple requis de la puissance de charge forcée à la vitesse de rotation courante.

2. Procédé selon la revendication 1, dans lequel le procédé comprend en outre l'étape consistant à :
commander la batterie haute tension pour qu'elle entre dans un mode de chauffage en réponse au fait qu'une température de la batterie haute tension est inférieure à un seuil prédéfini.

3. Dispositif de commande de charge et de décharge d'une batterie haute tension d'un véhicule hybride, comprenant :
un module de détermination de valeur d'état de charge (100) destiné à déterminer la valeur d'état de charge de la batterie haute tension du véhicule hybride et la valeur d'état de charge souhaitée ;
un module de commande de mode de charge et de décharge (200) destiné à commander le mode de charge et de décharge de la batterie haute tension sur la base de la valeur d'état de charge de la batterie haute tension ou d'une différence entre la valeur d'état de charge de la batterie haute tension et la valeur d'état de charge souhaitée ; et
un module de régulation de courant de charge et de décharge (300) destiné à réguler le courant de charge ou le courant de décharge de la batterie haute tension sur la base du mode de charge et de décharge de la batterie haute tension et du paramètre de véhicule,
dans lequel
le module de commande de mode de charge et de décharge (200) comprend un module de commande de mode de décharge active (210), un module de commande de mode de décharge passive (220), un module de commande de mode de maintien de quantité électrique (230), un module de commande de mode de charge à rendement commun (240), un module de commande de mode de charge à haut rendement (250) et un module de commande de mode de charge forcée (260),
**caractérisé en ce que**
le dispositif de commande de charge et de décharge est apte à mettre en œuvre le procédé de commande de charge et de décharge selon la revendication 1 ou la revendication 2.

4. Dispositif selon la revendication 3, dans lequel le dispositif comprend en outre :
un module de commande de température (400) destiné à commander la batterie haute tension pour qu'elle entre dans un mode de chauffage en réponse au fait que la température de la batterie haute tension est inférieure au seuil prédéfini.

5. Programme informatique, comprenant des codes pouvant être lus par ordinateur ; lorsque les codes pouvant être lus par ordinateur sont exécutés sur un appareil de commande de charge et de décharge de la batterie haute tension, l'appareil de commande de charge et de décharge de la batterie haute tension exécute le procédé de commande de charge et de décharge de la batterie haute tension selon la revendication 1 ou la revendication 2.

6. Support lisible par ordinateur maintenant en son sein le programme informatique selon la revendication 5.
